# EUROPEAN PATENT SPECIFICATION

(11) **EP 4 332 399 B1**
(45) Date of publication and mention of the grant of the patent: **26.02.2025**
(21) Application number: 22193006.8
(22) Date of filing: 30.08.2022
(51) Int. Cl.: F16D 1/10, F16D 1/108, F16D 11/14, F16D 1/112

(54) **ELECTRIC PROPULSON SYSTEMS**
ELEKTROANTRIEBSSYSTEME
SYSTÈMES DE PROPULSION ÉLECTRIQUE

(43) Date of publication of application: 06.03.2024
(73) Proprietor: Hamilton Sundstrand Corporation, Charlotte, NC 28217 (US)
(72) Inventor: TATE, David James, Hemel Hempstead (GB)
(74) Representative: Dehns

(56) References cited:
- DE-A1- 102019 218 983
- FR-A1- 3 119 800
- US-A- 4 694 943
- US-B2- 11 396 903

## Description

This application relates to electric propulsion systems and in particular drive mechanisms including a disconnect for electric propulsion systems.

Electric propulsion systems often include an electric machine that functions as an electric motor when it converts electricity to mechanical power, and as a generator when converts mechanical power to electricity. When acting as an electric motor the electric machine introduces torque into a drive mechanism, and that torque is transferred to a propulsion means, for example one or more propellers of an aeroplane or one or more wheels of a wheeled vehicle, for example a car. When acting as a generator the electric machine receives torque from the drive mechanism, and that torque is converted into electricity. That electricity may be stored in an electricity storage device, for example a rechargeable battery, or used to power a an electrical system. Some electric machines include one or more permanent magnets.

It is known that to manage system safety requirements for electric propulsion systems, including those that include one or more permanent magnets, there is a need to be able to disconnect the electric machine from the drive mechanism to ensure that the electric machine can be stopped from rotating or being rotated. This is necessary to manage a number of fault conditions. It also allows damage to the electric machine to be minimised or avoided once a fault has developed.

In some electric propulsion system architectures, a plurality of electric machines may provide torque to or receive torque from a single drive mechanism. In such architectures there may be a need to be able to disconnect the electric machines from the drive mechanism as a whole, or to disconnect the electric machines singly to ensure that one or more of the electric machines can be stopped from rotating or being rotated as required.

US 4694943 A discloses a system for conversion of a vehicle between two-wheel drive and four-wheel drive. The conversion is effected by a camming assembly and a shift mechanism which temporarily locks the camming assembly against rotation when advancing a drive gear into driving engagement with a receiving gear when converting to four-wheel drive. The camming assembly is reengaged under the control of the shift mechanism as a preliminary to disengaging the drive gear from the receiving gear when converting to two-wheel drive.

According to a first aspect of the present disclosure there is provided a drive mechanism for an electric propulsion system that comprises an electric machine. The drive mechanism comprises a drive shaft with a longitudinal axis A, an engagement means, and a disconnect mechanism. The engagement means comprises a drive shaft engagement element and an electric machine engagement element. The drive engagement element comprises a first and second shaft gear ring, and each shaft gear ring is supported on the drive shaft. Each shaft gear ring comprises a plurality of gear teeth which are circumferentially disposed around the drive shaft, and the gear teeth extend radially outward from the drive shaft. The gear teeth of the first shaft gear ring have an axial length L1, and the first and second shaft gear rings are axially spaced from each other along the drive shaft by a distance L2. The electric machine engagement element comprises a first and second gear set; and the first and second gear sets each comprise a plurality of gear teeth which are configured to mesh with the gear teeth of the first and second shaft gear rings respectively. The gear teeth of the first gear set have an axial length L3, and the first and second gear sets are separated from each other by a length L4 in the axial direction. The length L1 is less than length L4, and length L3 is less than length L2. The disconnect mechanism is configured to reversibly move one of the drive shaft engagement element or a part thereof and the electric machine engagement element or a part thereof relative to the other of the engagement elements in an axial direction between a first position and a second position. The first position is one in which the gear teeth of the first shaft gear ring are meshed with the gear teeth of the first gear set and the gear teeth of the second shaft gear ring are meshed with the gear teeth of the second gear set. The second position is one in which the gear teeth of the first shaft gear ring are axially between the first and second gear sets and the gear teeth of the first shaft gear ring are not meshed with the gear teeth of the first or second gear sets.

For the purposes of the present invention an electric machine is to be understood to be an apparatus that is configured to function as an electric motor only, an apparatus that is configured to function as a generator only, or an apparatus configured to function as both an electric motor and a generator.

The meshing of the gear teeth for the first and second shaft gear rings with the gear teeth of the first and second gear sets respectively is such that rotation of one of the first and second shaft gear rings and the first and second gear sets transmits torque to the other of the first and second shaft gear rings and the first and second gear sets with the effect that the gear teeth of both of the first and second shaft gear rings follow a circumferential path around the axis A, and the gear teeth of the first and the second gear sets each follow a circumferential path around a first and second gear set axis respectively.

In some embodiments the axis A, the first gear set axis and the second gear set axis are the same axis or in common.

In some embodiments the axis A, the first gear set axis and the second gear set axis are parallel axes.

In some embodiments the axis A, the first gear set axis and the second gear set axis are not all parallel to each other or in common with each other.

An advantage of the drive mechanism of the present disclosure is that because L1 is smaller than L4, and L3 smaller than L2 the teeth of the first shaft gear ring can sit axially between the teeth of the first gear sets, and the teeth of the first gear sets can sit axially between the teeth of the shaft gear rings without any of the teeth engaging or meshing with each other.

In an embodiment of any of the above embodiments, the drive shaft engagement element of at least one engagement means comprises n(1) shaft gear rings, and n(2) gear sets, where n(1) is greater than two, and n(2) is greater than two.

In an embodiment of the above embodiment, n(1) equals n(2).

In an embodiment of any of the above embodiments when n(1) and n(2) are greater than two, the gear teeth of the each shaft gear ring have an axial length L1, and axially adjacent shaft gear rings are axially spaced from each other along the drive shaft by a distance L2, the gear teeth of each gear set have an axial length L3, and gear sets that are adjacent in the axial direction are each separated from each other by a length L4 in the axial direction.

In an embodiment of any of the above embodiments, length L1 is approximately equal to length L3.

In an embodiment of any of the above embodiments, length L2 is approximately equal to length L4.

The maximum torque transmission that can occur between the drive shaft engagement element and the electric machine engagement element is dependent on the area of contact between the teeth of the shaft gear rings and the teeth of the gear sets. In known drive mechanisms there is one shaft drive ring and one gear set and the way to increase the maximum torque transmission between the shaft gear ring and the gear set is to increase the axial length of both the teeth on the shaft gear ring and the teeth on the gear set. This increases the contact area between those teeth which has the effect of increasing the area of contact and as such the maximum torque that is transmissible. This also has the effect of increasing the axial movement between the shaft gear ring and the gear set that is required to disengage or de-mesh the shaft gear ring from the gear set.

It is an advantage of the drive mechanism of the present disclosure that the axial movement of the shaft gear rings relative to the gear sets that is required to disengage the shaft gear rings from the gear sets is the larger of distances L1 and L3 whilst the contact length, and thus contact area, between the teeth of the shaft gear rings and the teeth of the gear sets is the smaller of twice L1 and twice L3. In embodiments where L1 is equal to L3, the effect is that the axial movement to disengage the shaft gear ring and the gear set is half that of the known mechanism which has the same contact length / area of twice L1 between the teeth on the shaft gear ring and the teeth on the gear set (when all other dimensions of the compared drive mechanisms are equal).

A further advantage of the drive mechanism of the present disclosure is that when n(1) and n(2) are greater than two the required axial movement of the shaft gear rings relative to the gear sets to disengage the shaft gear rings from the gear sets remains the larger of distances L1 and L3 whilst the contact length between the teeth of the shaft gear rings and the teeth of the gear sets is the smaller of n(1) x L1 and n(2) x L3.

In an embodiment of any of the above embodiments, the first and second shaft gear rings are rigidly fixed to the drive shaft such that they cannot move along the drive shaft in an axle direction.

In an alternative embodiment of the above embodiment, the first and second shaft gear rings are attached to the drive shaft in such a fashion that they may move at least a predetermined distance along the shaft in an axle direction when impelled to do so by the disconnect mechanism.

In an embodiment of any of the above embodiments, the drive mechanism is for use with two or more electric machines. The drive mechanism comprises two or more engagement means, and each engagement means is associated with a single or common drive shaft. The engagement means are axially spaced along the drive shaft. This arrangement or architecture is advantageous because all of the electric machines can apply torque to the same, common, drive shaft. This minimises the number of components in the drive mechanism and increases the torque supplied to the propulsion system relative to a single electric machine.

In an embodiment of any of the above embodiments, each engagement means is substantially the same as or similar to the other engagement means.

In an embodiment of any of the above embodiments, at least one of the gear sets of at least one engagement means comprises a second gear ring.

In an embodiment of any of the above embodiments, each second gear ring is co-axial with the drive shaft, and the gear teeth of each second gear ring extend radially inwards. An advantage of such an arrangement is that the drive mechanism can be, as a result, compact in size.

In an embodiment of any of the above embodiments, the gear teeth of each shaft gear ring are male or external splines, and the gear teeth of each gear set are female or internal splines.

In an embodiment of any of the above embodiments, the electric machine engagement element of at least one engagement means further comprises a hollow shaft, and each gear set of the electric machine engagement element is supported on the hollow shaft. In such embodiments the hollow shaft has a central axis that is the same as Axis A of the drive shaft.

In an embodiment of any of the above embodiments, the drive shaft further comprises a first stop element, one of the electric machine engagement elements of one of the engagement means further comprises a second stop element, and the first and second stop elements are so configured and located that they abut when the drive shaft engagement element and the electric machine engagement element of that engagement means and or the shaft gear rings and the gear sets are in the second position relative to each other. This is advantageous because the first and second stop elements prevent the shaft gear rings moving relative to the gear sets (or the gear sets moving relative to the shaft gear rings) by a distance that would cause the teeth of the shaft gear rings to begin to mesh with the teeth of the gear sets adjacent to the gear set (or the teeth of the gear sets to begin to mesh with the teeth of the shaft gear rings) that they are intended to mesh with.

In an embodiment of any of the above embodiments, each of the first and second stop elements comprises a stop surface, the stop surfaces of the first and second stop elements abut, and one or both of the stop surfaces comprise or are coated with a low friction material. This is advantageous because it minimises the friction between the stop surfaces and, as a result, minimises the transmission of torque between those stop surfaces.

In an embodiment of any of the above embodiments, each engagement means comprises a disconnect mechanism, the disconnect mechanism of each engagement means causes at least part of the electric machine engagement element to move axially relative to the drive shaft engagement element of that engagement means. In some embodiments the disconnect mechanism of each engagement means operates independently of the disconnect mechanisms of each other engagement means. This has the advantage that individual electric machines may be disengaged from the drive shaft without having to disengage other electric machines from the drive shaft.

In an alternative embodiment of any of the above embodiments, the drive mechanism is so configured that operation of the disconnect mechanism causes the relative movement of one of the drive shaft engagement element and electric machine engagement element relative to the other of the drive shaft engagement element and electric machine engagement element for each engagement means.

In an embodiment of any of the above embodiments, at least one disconnect mechanism comprises an actuator.

In an embodiment of any of the above embodiments, at least one disconnect mechanism comprises a solenoid mechanism.

According to a second aspect of the present disclosure there is provided an aeroplane or wheeled vehicle comprising an electric propulsion system, in which the electric propulsion system comprises at least one electric machine and at least one drive mechanism according to the first aspect of the present disclosure.

The present invention will be further described and explained by way of example with reference to the accompanying drawings in which
Figure 1 shows a schematic view of a first embodiment of an aeroplane incorporating a first embodiment of a drive mechanism according to the present disclosure;
Figure 2 shows a schematic view of a second embodiment of an aeroplane incorporating a second embodiment of a drive mechanism according to the present disclosure;
Figure 3 shows a first schematic view of the drive mechanism of Figure 1;
Figure 4 shows a second schematic view of the drive mechanism of Figure 1;
Figure 5 shows a schematic view of an embodiment of the drive mechanism of Figure 2.

In the following discussions of the accompanying drawings, where the same element is present in a more than one embodiment the same reference numeral is used for that element throughout. Where there are similar elements, similar reference numerals (the same numeral plus a multiple of 100) are used.

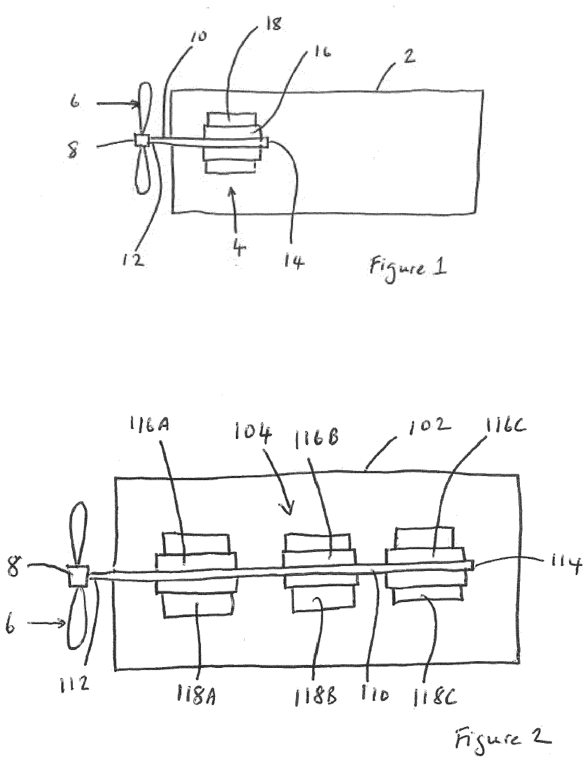

With reference to Figure 1, an aeroplane 2 includes a propulsion system 4. The propulsion system 4 includes a propeller 6 which has a hub 8. The hub 8 is connected to a first end 12 of a drive shaft 10. Between the first end 12 and a second end 14 of the drive shaft 10 an electric machine 18 is engaged with the drive shaft 10 via a drive mechanism 16.

With reference to Figure 2, an aeroplane 102 includes a propulsion system 104. The propulsion system 104 includes a propeller 6 which has a hub 8. The hub 8 is connected to a first end 112 of a drive shaft 110. Between the first end 112 and a second end 114 of the drive shaft 110 three electric machines 118A, 118B, 118C are each engaged with the drive shaft 110 via a drive mechanism 116A, 116B, 116C respectively. In the illustrated embodiment in Figure 2 each electric machine 118A, 118B, 118C has the same configuration as electric machine 18 shown in Figure 1.

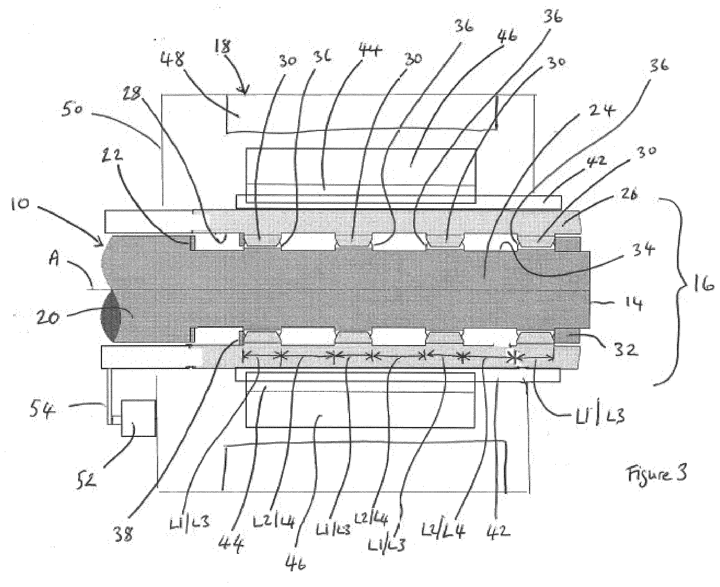

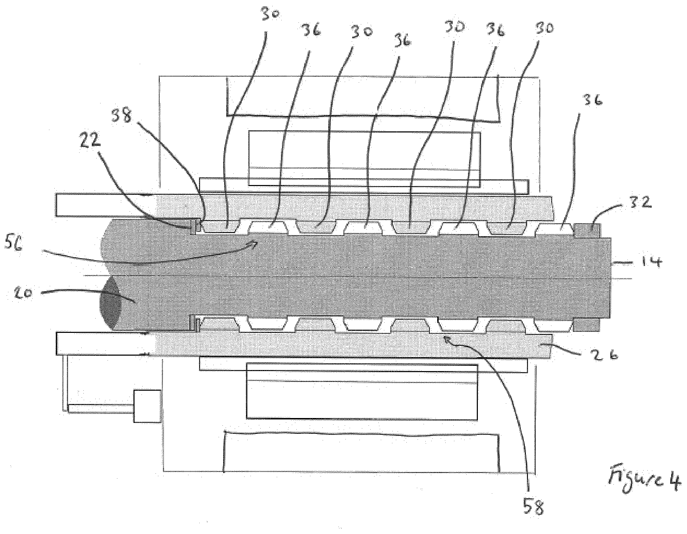

With reference to Figures 3 and 4, and with continued reference to Figure 1, the drive shaft 10 has a longitudinal axis A and is comprised of a first portion 20 that extends from the first end 12 to a radially inwardly extending shoulder or stop element 22, and a second portion 24 which extends from the shoulder 22 to the second end 14. Adjacent the second end 14 a stop ring 32 extends circumferentially around and radially outward from the radially outer surface 34 of the drive shaft 10.

Located on the radially outer surface 34 of the second portion 24 of the drive shaft 10 is a drive engagement element 56 which is comprised of four gear rings. Each of the gear rings has the form of a male or external set of splines 36. The splines 36 are spaced circumferentially around the outer surface 34 and extend radially outwardly. Each of the splines 36 has an axial length L1 in the direction of axis A. The splines 36 / each gear ring are axially spaced from the axially adjacent splines 36 / gear ring(s) by a distance L2. In other non-illustrated examples of the drive mechanism of the present disclosure a different number of gear rings may be present. That different number may be two, three, or more than four. The number of gear rings / splines included in the drive engagement element may be determined by the desired maximum torque transmission between the drive shaft and the electric machine.

The splines 36 of the gear ring that is axially closest to the second end 14 of the drive shaft 10 are located on the gear shaft 10 so that the end of the splines 36 closest to end 14 abut the stop ring 32.

The drive mechanism 16 includes a hollow shaft 26 which is co-axial with the drive shaft 10. The drive shaft 10 extends through the hollow shaft 26, and the second portion 24 of the drive shaft 10 is substantially surrounded by the hollow shaft 26 together with the shoulder 22 and a part of the first portion 20 of the drive shaft 10 which is adjacent to the shoulder 22. The surrounded parts of the drive shaft 10 are to be considered to be part of the drive mechanism 16 for the purposes of the present disclosure.

The hollow shaft 26 has a radially outwardly facing surface 40 and a radially inwardly facing surface 28. Located on the radially inwardly facing surface 28 of the hollow shaft 26 is an electric machine engagement element 58. The electric machine engagement element 58 includes four gear sets. Each of the gear sets has the form of an female or internal set of splines 30. The splines 30 are spaced circumferentially around the inner surface 28 and extend radially inwardly. Each of the splines 30 has an axial length L3 in the direction of axis A. The splines 30 of each gear set are axially spaced from the splines 30 of the adjacent gear set(s) by a distance L4. In other non-illustrated examples of the drive mechanism of the present disclosure a different number of gear sets may be present. That different number may be two, three, or more than four.

In the embodiment illustrated in Figures 3 and 4, lengths L1 and L3 are same as each other as are distance L2 and L4.

Adjacent to the of the splines 30 of the gear set furthest from the second end 14 of the drive shaft 10 end furthest from the second end 14 of the drive shaft 10 is a stop element or stop block 38. The face of the stop element 38 furthest from the end 14 of the drive shaft 10 is coated with a low friction material.

The electric machine 18 includes a casing 50 within which a stator 48 is fixed and an armature 46 is supported on two or more bearings (not shown). The armature 46 is caused to rotate when electrical power is supplied to the electric machine 18. The armature 46 supports or is coupled to a set of female or internal drive splines 44. The electric machine 18 is so configured that the set of female drive splines 44 is adapted to follow a circumferential path around the axis A.

Located on the radially outward facing surface 40 of the hollow shaft 26 are a set of male or external drive splines 42. The hollow shaft 26 is so configured that the male drive splines 42 mesh with the set of female drive splines 44 coupled to the armature 46.

Supported on the case 50 of the electric machine 18 is a disconnect mechanism in the form of a solenoid 52. The solenoid 52 is coupled to the hollow shaft 26 via a coupling 54. The engagement of the coupling 54 to the hollow shaft 26 is such that the coupling remains engaged to the hollow shaft 26 when the hollow shaft 26 is rotating around the axis A.

Actuation of the solenoid 52 causes the hollow shaft 26 to be moved between a first position shown in Figure 3 (in which the gear sets / splines 30 on the hollow cylinder 26 and the gear rings / splines 36 on the drive shaft 10 are fully engaged or meshed with each other), and a second position shown in Figure 4 (in which the gear sets / splines 30 on the hollow cylinder 26 and the gear rings / splines 36 on the drive shaft 10 are not engaged or meshed with each other).

When the hollow cylinder 26 is in the first position the splines 30 closest to the end 14 of the drive shaft 10 abut the stop ring 32, and the hollow cylinder 26 is thus prevented from traveling any further toward or past the end 14 of the drive shaft 10.

When the hollow cylinder 26 is in the second position the stop element 38 abuts the shoulder or stop element 22 and prevents the hollow cylinder 26 moving too far away from the second end 14 of the drive shaft 10 and the splines 30 and 36 reengaging with each other.

The configuration of the set of female drive splines 44 and set of male drive splines 42 is such that those drive splines 42, 44 remain meshed or engaged with other throughout the movement of the hollow shaft 26 between the first and second positions.

With further reference to Figure 2, in a first embodiment of the aeroplane 102, each of the drive mechanisms 116A, 116B, 116C are configured in the same fashion as drive mechanism 16 described above in connection with Figures 3 and 4. In particular, the hollow shafts 26 of drive mechanism 116A, 116B, 116C are separate from each other and each of the actuators 52 of drive mechanisms 116A, 116B, 116C are independently controllable by suitable control means (not shown). As a result, each of electric machines 18A, 18B, 18C can be engaged with or disengaged from the drive shaft 110 independently of the other electric machines. Thus the propeller 6 can be driven by or drive one, two or three of the electric machines 18A, 18B, 18C.

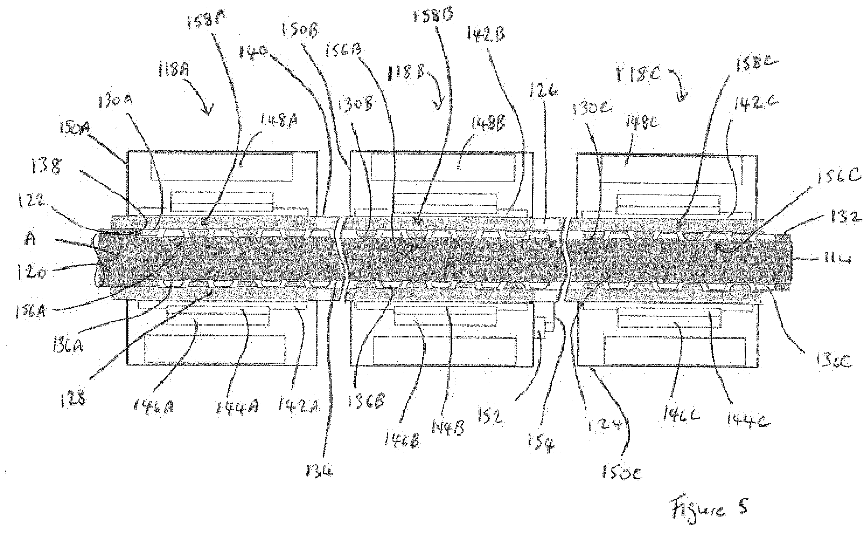

With reference to Figure 5 and with further reference to Figure 2, in a second embodiment of the aeroplane 102 the drive shaft 110 has a longitudinal axis A and is comprised of a first portion 120 that extends from the first end 112 to a radially inwardly extending shoulder or stop element 122, and a second portion 124 which extends from the shoulder 122 to the second end 114. Adjacent the second end 114 a stop ring 132 extends circumferentially around and radially outward from the radially outer surface 134 of the drive shaft 110.

Located on the radially outer surface 134 of the second portion 124 of the drive shaft 110 are three drive engagement elements 156A, 156B, 156C which are axially spaced along the second portion 124 of the drive shaft 110. Each of the drive engagement elements 156A, 156B, 156C is comprised of four gear rings. The gear rings each have the form of a set of male or external splines 136A, 136B, 136C respectively (for clarity not all of not all of splines 136A, 136B, 136C are labelled). The splines 136A, 136B, 136C are spaced circumferentially around the outer surface 134 and extend radially outwardly. Each of the splines 136A, 136B, 136C has an axial length L1 in the direction of axis A. Within each drive engagement element 156A, 156B, 156C the splines 136A, 136B, 136C / each gear ring are axially spaced from the axially adjacent splines 136A, 136B, 136C / gear ring(s) by a distance L2. In other non-illustrated examples of the drive mechanism of the present disclosure a different number of gear rings in each drive engagement element may be present. That different number may be two, three, or more than four. There may be different numbers of gear rings in one or more of the drive engagement elements. The number of gear rings / splines included in each drive engagement element may be determined by the desired maximum torque transmission between the drive shaft and the electric machine with which the drive engagement element is associated.

The splines 136 of the gear ring that is axially closest to the second end 114 of the drive shaft 110 are located on the gear shaft 110 so that the end of the splines 136C closest to end 114 abut the stop ring 132.

The drive mechanisms 116A, 116B, 116C share a common hollow shaft 126 which is co-axial with the drive shaft 110. The drive shaft 110 extends through the hollow shaft 126, and the second portion 124 of the drive shaft 110 is substantially surrounded by the hollow shaft 126 together with the shoulder 122 and a part of the first portion 120 of the drive shaft 110 which is adjacent to the shoulder 122. The surrounded parts of the drive shaft 110 are to be considered to be part of the drive mechanisms 116A, 116B, 116C for the purposes of the present disclosure.

The hollow shaft 126 has a radially outwardly facing surface 140 and a radially inwardly facing surface 128. Located on the radially inwardly facing surface 128 of the hollow shaft 126 are three electric machine engagement elements 158A, 158B, 158C. The electric machine engagement elements 158A, 158B, 158C each include four gear sets. Each of the gear sets has the form of an female or internal set of splines 130A, 130B, 130C respectively (for clarity not all of not all of splines 130A, 130B, 130C are labelled). The splines 130A, 130B, 130C are spaced circumferentially around the inner surface 128 and extend radially inwardly. Each of the splines 130A, 130B, 130C has an axial length L3 in the direction of axis A. The splines 130A, 130B, 130C / each gear set are axially spaced from the axially adjacent splines 301 gear set(s) by a distance L4. In other non-illustrated examples of the drive mechanism of the present disclosure a different number of gear sets may be present. That different number may be two, three, or more than four. There may be different numbers of gear sets in one or more of the electric machine engagement elements. The number of gear sets / splines included in each electric machine engagement element may be determined by the desired maximum torque transmission between the drive shaft and the electric machine with which the electric machine engagement element is associated.

In the embodiment illustrated in Figures 5, lengths L1 and L3 are same as each other as are distance L2 and L4.

Adjacent to the of the splines 130A of the gear set furthest from the second end 114 of the drive shaft 110 end furthest from the second end 114 of the drive shaft 110 is a stop element or stop block 138. The face of the stop element 138 furthest from the end 114 of the drive shaft 110 is coated with a low friction material.

Each of the electric machines 118A, 118B, 118C includes a casing 150A, 150B, 150C within which a stator 148A, 148B, 148C is fixed and an armature 146A, 146B, 146C is supported on two or more bearings (not shown). The armatures 146A, 146B, 146C are caused to rotate when electrical power is supplied to the electric machines 118A, 118B, 118C. Each of the armatures 146A, 146B, 146C support or are coupled to a set of female or internal drive splines 144A, 144B, 144C respectively. The electric machines 118A, 118B, 118C are so configured that the set of female drive splines 144A, 144B, 144C are each adapted to follow a circumferential path around the axis A.

Located on the radially outward facing surface 140 of the hollow shaft 126 are three sets of male or external drive splines 142A, 142B, 142C. The hollow shaft 126 is so configured that the male drive splines 142A, 142B, 142C mesh with the female drive splines 144A, 144B, 144C coupled to the armature 146A, 146B, 146C respectively.

Supported on the case 150B of the electric machine 118B is a disconnect mechanism in the form of a solenoid 152. The solenoid 152 is coupled to the hollow shaft 126 via a coupling 154. The engagement of the coupling 154 to the hollow shaft 126 is such that the coupling remains engaged to the hollow shaft 126 when the hollow shaft 126 is rotating around the axis A.

Actuation of the solenoid 152 causes the hollow shaft 126 to be moved between a first position in which the gear sets / splines 130A, 130B, 130C on the hollow cylinder 126 and the gear rings / splines 136A, 136B, 136C on the drive shaft 110 are fully engaged or meshed with each other, and a second position shown in Figure 5 (in which the gear sets / splines 130A, 130B, 130C on the hollow cylinder 126 and the gear rings / splines 136A, 136B, 136C on the drive shaft 110 are not engaged or meshed with each other).

When the hollow cylinder 126 is in the first position the splines 130C closest to the end 114 of the drive shaft 110 abut the stop ring 132, and the hollow cylinder 126 is thus prevented from traveling any further toward or past the end 114 of the drive shaft 110.

When the hollow cylinder 126 is in the second position the stop element 138 abuts the shoulder or stop element 122 and prevents the hollow cylinder 126 moving too far away from the second end 114 of the drive shaft 110 and the splines 130A, 130B, 130Cand 136A, 136B, 136C reengaging with each other.

The configuration of the set of female drive splines 144A, 144B, 144C and set of male drive splines 142A, 142B, 142Cis such that those drive splines 142A, 142B, 142C, 144A, 144B, 144C remain meshed or engaged with other throughout the movement of the hollow shaft 126 between the first and second positions.

The above description is meant to be exemplary only, and one skilled in the art will recognize that changes may be made to the embodiments described without departing from the scope of the disclosure. Still other modifications which fall within the scope of the present disclosure will be apparent to those skilled in the art, in light of a review of this disclosure.

Various aspects of the drive mechanisms disclosed in the various embodiments may be used alone, in combination, or in a variety of arrangements not specifically discussed in the embodiments described above. Although particular embodiments have been shown and described, it will be obvious to those skilled in the art that changes and modifications may be made without departing from the scope of the following claims.

## Claims

1. A drive mechanism (16, 116A, 116B, 116C) for an electric propulsion system (4, 104) that comprises an electric machine (18, 118A, 118B, 118C), in which
the drive mechanism (16, 116A, 116B, 116C) comprises a drive shaft (10, 110) with a longitudinal axis A, an engagement means, and a disconnect mechanism (52); the engagement means comprises a drive shaft engagement element (56) and an electric machine engagement element (58); wherein
the drive shaft engagement element (56) comprises a first and second shaft gear ring, and each shaft gear ring is supported on the drive shaft (10, 110);
each shaft gear ring comprises a plurality of gear teeth (36) which are circumferentially disposed around the drive shaft(10, 110), and the gear teeth (36) extend radially outward from the drive shaft (10, 110);
the gear teeth (36) of the first shaft gear ring have an axial length L1;
the first and second shaft gear rings are axially spaced from each other along the drive shaft by a distance L2;
the electric machine engagement element (58) comprises a first and second gear set;
the first and second gear sets each comprise a plurality of gear teeth (30) which are configured to mesh with the gear teeth (36) of the first and second shaft gear rings respectively;
the gear teeth (30) of the first gear set have an axial length L3;
the first and second gear sets are separated from each other by a length L4 in the axial direction,
length L1 is less than length L4;
length L3 is less than length L2; **characterised in that** the disconnect mechanism (52) is configured to reversibly move one of at least part of the drive shaft engagement element (56) and at least part of the electric machine engagement element (58) relative to the other of the engagement elements in an axial direction between a first position and a second position;
in which in the first position the gear teeth (36) of the first shaft gear ring are meshed with the gear teeth (30) of the first gear set and the gear teeth (36) of the second shaft gear ring are meshed with the gear teeth (30) of the second gear set, and in the second position the gear teeth (36) of the first shaft gear ring are axially between the first and second gear sets and the gear teeth (36) of the first shaft gear ring are not meshed with the gear teeth (30) of the first or second gear sets.

2. A drive mechanism (16, 116A, 116B, 116C) according to claim 1 in which
the drive mechanism is for use with two or more electric machines (18, 118A, 118B, 118C);
the drive mechanism comprises two or more engagement means, each engagement means is associated with a common drive shaft (10, 110), and the engagement means are axially spaced along the drive shaft (10, 110).

3. A drive mechanism (16, 116A, 116B, 116C) according to claim 2 in which each engagement means is substantially the same as the other engagement means.

4. A drive mechanism (16, 116A, 116B, 116C) according to any of claims 1 to 3 in which length L1 is approximately equal to length L3.

5. A drive mechanism (16, 116A, 116B, 116C) according to any of claims 1 to 4 in which the drive shaft engagement element of at least one engagement means comprises n(1) shaft gear rings, and n(2) gear sets, where n(1) is greater than two, and n(2) is greater than two.

6. A drive mechanism (16, 116A, 116B, 116C) according to any of claims 1 to 5 in which at least one of the gear sets of at least one engagement means comprises a second gear ring.

7. A drive mechanism (16, 116A, 116B, 116C) according to claim 6 in which each second gear ring is co-axial with the drive shaft (10, 110), and the gear teeth (36) of each second gear ring extend radially inwards.

8. A drive mechanism (16, 116A, 116B, 116C) according to claim 6 or 7 in which the gear teeth (36) of each shaft gear ring are male splines, and the gear teeth (30) of each gear set are female splines.

9. A drive mechanism (16, 116A, 116B, 116C) according to any of claims 1 to 8 in which the electric machine engagement element (58) of at least one engagement means further comprises a hollow shaft (26), and each gear set of the electric machine engagement element (58) is supported on the hollow shaft (26).

10. A drive mechanism (16, 116A, 116B, 116C) according to any of claims 1 to 9 in which the drive shaft (10, 110) further comprises a first stop element (38), one of the electric machine engagement elements (58) of one of the engagement means further comprises a second stop element (22), and the first and second stop elements (38, 22) are so configured and located that they abut when the drive shaft engagement element (56) and the electric machine engagement element (58) of that engagement means are in the second position relative to each other.

11. A drive mechanism (16, 116A, 116B, 116C) according to claim 10 in which each of the first and second stop elements (38, 22) comprises a stop surface, the stop surfaces of the first and second stop elements (38, 22) abut, and one or both of the stop surfaces comprise or are coated with a low friction material.

12. A drive mechanism (16, 116A, 116B, 116C) according to any of claims 2 or 3 to 11 when dependent on claim 2 in which each engagement means comprises a disconnect mechanism (52), the disconnect mechanism (52) of each engagement means causes at least part of the electric machine engagement element (58) to move axially relative to the drive shaft engagement element (56) of that engagement means, and the disconnect mechanism (52) of each engagement means operates independently of the disconnect mechanisms (52) of each other engagement means.

13. A drive mechanism (16, 116A, 116B, 116C) of any of claims 1 to 11 in which the drive mechanism is so configured that operation of the disconnect mechanism (52) causes the relative movement of one of at least part of the drive shaft engagement element (56) and at least part of electric machine engagement element (58) relative to the other of the drive shaft engagement element (56) and electric machine engagement element (58) for each engagement means.

14. A drive mechanism (16, 116A, 116B, 116C) according to any of claims 1 to 13 in which at least one disconnect mechanism (52) comprises an actuator, optionally the actuator is a solenoid mechanism.

15. An aeroplane (2) or wheeled vehicle comprising an electric propulsion system (4), in which the electric propulsion system (4) comprises at least one electric machine (18) and at least one drive mechanism (16, 116A, 116B, 116C) according to any of claims 1 to 14.

## Patentansprüche

1. Antriebsmechanismus (16, 116A, 116B, 116C) für ein Elektroantriebssystem (4, 104), der eine Elektromaschine (18, 118A, 118B, 118C) umfasst, wobei
der Antriebsmechanismus (16, 116A, 116B, 116C) eine Antriebswelle (10, 110) mit einer Längsachse A, ein Kupplungselement und einen Trennmechanismus (52) umfasst;
das Kupplungselement ein Antriebswellenkupplungselement (56) und ein Elektromaschinenkupplungselement (58) umfasst, wobei das Antriebswelleneingriffselement (56) einen ersten und einen zweiten Getriebewellenzahnkranz umfasst, und jeder Getriebewellenzahnkranz auf der Antriebswelle (10, 110) montiert ist;
jeder Getriebewellenzahnkranz eine Vielzahl von Verzahnungen (36) umfasst, die kreisförmig um die Antriebswelle (10, 110) angeordnet sind, und die Verzahnungen (36) erstrecken sich von der Antriebswelle (10, 110) radial nach außen;
die Verzahnungen (36) des ersten Getriebewellenzahnkranzes eine axiale Länge L1 aufweisen;
der erste und zweite Getriebewellenzahnkranz entlang der Antriebswelle axial um einen Abstand L2 voneinander entfernt sind;
das Elektromaschineneingriffselement (58) einen ersten und einen zweiten Zahnradsatz umfasst;
der erste und der zweite Zahnradsatz jeweils eine Vielzahl von Verzahnungen (30) umfassen, die so konfiguriert sind, dass sie zu den Verzahnungen (36) des ersten bzw. des zweiten Getriebewellenzahnkranzes passen;
die Verzahnung (30) des ersten Zahnradsatzes eine axiale Länge L3 aufweisen,
der erste und der zweite Zahnradsatz in axialer Richtung um eine Länge L4 voneinander entfernt sind;
Länge L1 kleiner als Länge L4 ist;
Länge L3 kleiner als Länge L2 ist; und **dadurch gekennzeichnet, dass**
der Trennmechanismus (52) derart konfiguriert ist, zumindest ein Teil des Antriebswellenkupplungselements (56) und zumindest ein Teil des Elektromaschinenkupplungselements (58) relativ zu den anderen der Kupplungselementen in einer axialen Richtung zwischen einer ersten Position und einer zweiten Position reversibel zu bewegen;
wobei in der ersten Stellung die Verzahnung (36) des ersten Getriebewellenzahnkranzes mit der Verzahnung (30) des ersten Zahnradsatzes verzahnt ist und die Verzahnung (36) des zweiten Getriebewellenzahnkranzes mit der Verzahnung (30) des zweiten Zahnradsatzes verzahnt ist, und in der zweiten Stellung die Verzahnung (36) des ersten Getriebewellenzahnkranzes axial zwischen dem ersten und zweiten Zahnradsatz liegt und die Verzahnung (36) des ersten Getriebewellenzahnkranzes nicht mit der Verzahnung (30) des ersten oder zweiten Zahnradsatzes verzahnt ist.

2. Antriebsmechanismus (16, 116A, 116B, 116C) nach Anspruch 1, bei dem der Antriebsmechanismus zur Verwendung mit zwei oder mehr Elektromaschinen (18, 118A, 118B, 118C) bestimmt ist;
der Antriebsmechanismus zwei oder mehr Kupplungselemente umfasst, wobei jedes Kupplungselement einer gemeinsamen Antriebswelle (10, 110) zugeordnet ist und die Kupplungselemente axial entlang der Antriebswelle (10, 110) einen Abstand aufweisen.

3. Antriebsmechanismus (16, 116A, 116B, 116C) nach Anspruch 2, bei dem jedes Kupplungselement im Wesentlichen mit den anderen Kupplungselementen identisch ist.

4. Antriebsmechanismus (16, 116A, 116B, 116C) gemäß einem der Ansprüche 1 bis 3, bei dem die Länge L1 ungefähr gleich der Länge L3 ist.

5. Antriebsmechanismus (16, 116A, 116B, 116C) gemäß einem der Ansprüche 1 bis 4, bei dem die Antriebswellenkupplungselemente von mindestens einem Kupplungselement n(1) Getriebewellenzahnkränze und n(2) Zahnradsätze umfasst, wobei n(1) größer als zwei und n(2) größer als zwei ist.

6. Antriebsmechanismus (16, 116A, 116B, 116C) gemäß einem der Ansprüche 1 bis 5, bei dem mindestens einer der Zahnradsätze mindestens ein Kupplungselement einen zweiten Zahnkranz umfasst.

7. Antriebsmechanismus (16, 116A, 116B, 116C) nach Anspruch 6, bei dem jeder zweite Zahnkranz koaxial zur Antriebswelle (10, 110) ist und die Verzahnung (36) jedes zweiten Zahnkranzes radial nach innen verlaufen.

8. Antriebsmechanismus (16, 116A, 116B, 116C) nach Anspruch 6 oder 7, bei dem die Verzahnung (36) jedes Getriebewellenzahnkranzes Außenverzahnungen sind und die Verzahnungen (30) jedes Zahnradsatzes Innenverzahnungen sind.

9. Antriebsmechanismus (16, 116A, 116B, 116C) gemäß einem der Ansprüche 1 bis 8, bei dem das Kupplungselement (58) der Elektromaschine von mindestens einem Kupplungselement ferner eine Hohlwelle (26) umfasst und jeder Zahnradsatz des Kupplungselements (58) der Elektromaschine auf der Hohlwelle (26) montiert ist.

10. Antriebsmechanismus (16, 116A, 116B, 116C) gemäß einem der Ansprüche 1 bis 9, bei dem die Antriebswelle (10, 110) ferner ein erstes Anschlagelement (38) umfasst, eines der Kupplungselemente (58) der Elektromaschine außerdem ein zweites Anschlagelement (22) umfasst und das erste und das zweite Anschlagelement (38, 22) derart konfiguriert und angeordnet sind, dass sie aneinander stoßen, wenn sich das Kupplungselement (56) der Antriebswelle und das Kupplungselement (58) der Elektromaschine dieses Kupplungselements in der zweiten Position relativ zueinander befinden.

11. Antriebsmechanismus (16, 116A, 116B, 116C) nach Anspruch 10, bei dem jedes der ersten und zweiten Anschlagelemente (38, 22) eine Anschlagfläche umfasst, die Anschlagflächen der ersten und zweiten Anschlagelemente (38, 22) aneinander anliegen und eine oder beide Anschlagflächen aus einem reibungsarmen Material bestehen oder damit beschichtet sind.

12. Antriebsmechanismus (16, 116A, 116B, 116C) gemäß einem der Ansprüche 2 oder 3 bis 11, sofern abhängig von Anspruch 2, bei dem jedes Kupplungselement einen Trennmechanismus (52) umfasst, der Trennmechanismus (52) jedes Kupplungselements bewirkt, dass sich zumindest ein Teil des Kupplungselements (58) der Elektromaschine axial relativ zum Antriebswellenkupplungselement (56) dieses Kupplungselements bewegt, und der Trennmechanismus (52) jedes Kupplungselements unabhängig von den Trennmechanismen (52) jedes anderen Kupplungselements arbeitet.

13. Antriebsmechanismus (16, 116A, 116B, 116C) nach einem der Ansprüche 1 bis 11, bei dem der Antriebsmechanismus derart konfiguriert ist, dass die Betätigung des Trennmechanismus (52) die Relativbewegung von mindestens einem Teil des Antriebswellenkupplungselements (56) und mindestens einem Teil des Elektromaschinenkupplungselements (58) relativ zum anderen Teil des Antriebswellenkupplungselements (56) und Elektromaschinenkupplungselements (58) für jedes Kupplungselement bewirkt.

14. Antriebsmechanismus (16, 116A, 116B, 116C) gemäß einem der Ansprüche 1 bis 13, bei dem mindestens ein Trennmechanismus (52) ein Stellglied umfasst, wobei das Stellglied optional ein Magnetmechanismus ist.

15. Flugzeug (2) oder Radfahrzeug mit einem Elektroantriebssystem (4), wobei das Elektroantriebssystem (4) mindestens eine Elektromaschine (18) und mindestens einen Antriebsmechanismus (16, 116A, 116B, 116C) gemäß einem der Ansprüche 1 bis 14 umfasst.

## Revendications

1. Mécanisme d'entraînement (16, 116A, 116B, 116C) pour un système de propulsion électrique (4, 104) qui comprend une machine électrique (18, 118A, 118B, 118C), dans lequel
le mécanisme d'entraînement (16, 116A, 116B, 116C) comprend un arbre d'entraînement (10, 110) avec un axe longitudinal A, un moyen de mise en prise et un mécanisme de déconnexion (52) ;
le moyen de mise en prise comprend un élément de mise en prise d'arbre d'entraînement (56) et un élément de mise en prise de machine électrique (58) ; dans lequel
l'élément de mise en prise d'arbre d'entraînement (56) comprend une première et une seconde couronne d'engrenage d'arbre, et chaque couronne d'engrenage d'arbre est montée sur l'arbre d'entraînement (10, 110) ;
chaque couronne d'engrenage d'arbre comprend une pluralité de dents d'engrenage (36) qui sont disposées de manière circonférentielle autour de l'arbre d'entraînement (10, 110), et les dents d'engrenage (36) se prolongent radialement vers l'extérieur à partir de l'arbre d'entraînement (10, 110) ;
les dents d'engrenage (36) de la première couronne d'engrenage d'arbre ont une longueur axiale L1 ;
les première et seconde couronnes d'engrenage d'arbre sont espacées axialement l'une de l'autre le long de l'arbre d'entraînement d'une distance L2 ;
l'élément de mise en prise de la machine électrique (58) comprend un premier et un second train d'engrenages ;
les premier et second trains d'engrenages comprennent chacun une pluralité de dents d'engrenage (30) qui sont configurées pour s'engrener respectivement avec les dents d'engrenage (36) des première et seconde couronnes d'engrenage d'arbre ;
les dents d'engrenage (30) du premier train d'engrenages ont une longueur axiale L3 ;
les premier et second trains d'engrenages sont séparés l'un de l'autre d'une longueur L4 dans la direction axiale,
la longueur L1 est inférieure à la longueur L4 ;
la longueur L3 est inférieure à la longueur L2 ; **caractérisé en ce que**
le mécanisme de déconnexion (52) est configuré pour déplacer de manière réversible l'un d'au moins une partie de l'élément de mise en prise d'arbre d'entraînement (56) et d'au moins une partie de l'élément de mise en prise de machine électrique (58) par rapport à l'autre des éléments de mise en prise dans une direction axiale entre une première position et une seconde position ;
dans lequel, dans la première position, les dents d'engrenage (36) de la première couronne d'engrenage d'arbre sont engrenées avec les dents d'engrenage (30) du premier train d'engrenages et les dents d'engrenage (36) de la seconde couronne d'engrenage d'arbre sont engrenées avec les dents d'engrenage (30) du second train d'engrenages et, dans la seconde position, les dents d'engrenage (36) de la première couronne d'engrenage d'arbre sont axialement entre les premier et second trains d'engrenages et les dents d'engrenage (36) de la première couronne d'engrenage d'arbre ne sont pas engrenées avec les dents d'engrenage (30) des premier ou second trains d'engrenages.

2. Mécanisme d'entraînement (16, 116A, 116B, 116C) selon la revendication 1, dans lequel le mécanisme d'entraînement est destiné à être utilisé avec deux ou plus machines électriques (18, 118A, 118B, 118C) ;
le mécanisme d'entraînement comprend deux ou plus moyens de mise en prise, chaque moyen de mise en prise est associé à un arbre d'entraînement commun (10, 110), et les moyens de mise en prise sont espacés axialement le long de l'arbre d'entraînement (10, 110) .

3. Mécanisme d'entraînement (16, 116A, 116B, 116C) selon la revendication 2, dans lequel chaque moyen de mise en prise est sensiblement le même que l'autre moyen de mise en prise.

4. Mécanisme d'entraînement (16, 116A, 116B, 116C) selon l'une quelconque des revendications 1 à 3, dans lequel la longueur L1 est approximativement égale à la longueur L3.

5. Mécanisme d'entraînement (16, 116A, 116B, 116C) selon l'une quelconque des revendications 1 à 4, dans lequel l'élément de mise en prise d'arbre d'entraînement d'au moins un moyen de mise en prise comprend n(1) couronnes d'engrenage d'arbre et n(2) trains d'engrenages, où n(1) est supérieur à deux et n(2) est supérieur à deux.

6. Mécanisme d'entraînement (16, 116A, 116B, 116C) selon l'une quelconque des revendications 1 à 5, dans lequel au moins l'un des trains d'engrenages d'au moins un moyen de mise en prise comprend une seconde couronne d'engrenage.

7. Mécanisme d'entraînement (16, 116A, 116B, 116C) selon la revendication 6, dans lequel chaque seconde couronne d'engrenage est coaxiale à l'arbre d'entraînement (10, 110), et les dents d'engrenage (36) de chaque seconde couronne d'engrenage se prolongent radialement vers l'intérieur.

8. Mécanisme d'entraînement (16, 116A, 116B, 116C) selon la revendication 6 ou 7, dans lequel les dents d'engrenage (36) de chaque couronne d'engrenage d'arbre sont des cannelures mâles, et les dents d'engrenage (30) de chaque train d'engrenages sont des cannelures femelles.

9. Mécanisme d'entraînement (16, 116A, 116B, 116C) selon l'une quelconque des revendications 1 à 8, dans lequel l'élément de mise en prise de machine électrique (58) d'au moins un moyen de mise en prise comprend également un arbre creux (26), et chaque train d'engrenages de l'élément de mise en prise de machine électrique (58) est montée sur l'arbre creux (26).

10. Mécanisme d'entraînement (16, 116A, 116B, 116C) selon l'une quelconque des revendications 1 à 9, dans lequel l'arbre d'entraînement (10, 110) comprend également un premier élément d'arrêt (38), l'un des éléments de mise en prise de machine électrique (58) de l'un des moyens de mise en prise comprend également un second élément d'arrêt (22) et les premier et second éléments d'arrêt (38, 22) sont configurés et situés de telle sorte qu'ils viennent en butée lorsque l'élément de mise en prise d'arbre d'entraînement (56) et l'élément de mise en prise de machine électrique (58) de ce moyen de mise en prise sont dans la seconde position l'un par rapport à l'autre.

11. Mécanisme d'entraînement (16, 116A, 116B, 116C) selon la revendication 10, dans lequel chacun des premier et second éléments d'arrêt (38, 22) comprend une surface d'arrêt, les surfaces d'arrêt des premier et second éléments d'arrêt (38, 22) sont en butée, et l'une ou les deux des surfaces d'arrêt comprennent ou sont revêtues d'un matériau à faible frottement.

12. Mécanisme d'entraînement (16, 116A, 116B, 116C) selon l'une quelconque des revendications 2 ou 3 à 11 lorsqu'elles dépendent de la revendication 2, dans lequel chaque moyen de mise en prise comprend un mécanisme de déconnexion (52), le mécanisme de déconnexion (52) de chaque moyen de mise en prise amène au moins une partie de l'élément de mise en prise de machine électrique (58) à se déplacer axialement par rapport à l'élément de mise en prise d'arbre d'entraînement (56) de ce moyen de mise en prise, et le mécanisme de déconnexion (52) de chaque moyen de mise en prise fonctionne indépendamment des mécanismes de déconnexion (52) de chaque autre moyen de mise en prise.

13. Mécanisme d'entraînement (16, 116A, 116B, 116C) selon l'une quelconque des revendications 1 à 11, dans lequel le mécanisme d'entraînement est configuré de telle sorte que le fonctionnement du mécanisme de déconnexion (52) provoque le mouvement relatif de l'un d'au moins une partie de l'élément de mise en prise d'arbre d'entraînement (56) et d'au moins une partie de l'élément de mise en prise de machine électrique (58) par rapport à l'autre de l'élément de mise en prise d'arbre d'entraînement (56) et de l'élément de mise en prise de machine électrique (58) pour chaque moyen de mise en prise.

14. Mécanisme d'entraînement (16, 116A, 116B, 116C) selon l'une quelconque des revendications 1 à 13, dans lequel au moins un mécanisme de déconnexion (52) comprend un actionneur, éventuellement l'actionneur est un mécanisme à solénoïde.

15. Avion (2) ou véhicule à roues comprenant un système de propulsion électrique (4), dans lequel le système de propulsion électrique (4) comprend au moins une machine électrique (18) et au moins un mécanisme d'entraînement (16, 116A, 116B, 116C) selon l'une quelconque des revendications 1 à 14.
